# EUROPÄISCHE PATENTSCHRIFT

(11) **EP 1 948 945 B1**
(45) Veröffentlichungstag und Bekanntmachung des Hinweises auf die Patenterteilung: **06.04.2011**
(21) Anmeldenummer: 06818372.2
(22) Anmeldetag: 04.11.2006
(51) Int. Cl.: F16B 33/00, E05D 5/02, F16B 5/02, F16B 37/12, B29C 45/14

(54) **MONTAGESCHRAUBE ZUR BEFESTIGUNG VON BESCHLAGTEILEN, INSBESONDERE VON BANDTEILEN AN HOHLKAMMERPROFILEN**
MOUNTING SCREW FOR FASTENING FITTING PARTS, IN PARTICULAR HINGE PARTS TO HOLLOW-CHAMBER PROFILES
VIS DE MONTAGE POUR LA FIXATION DE PIECES DE FERRURE, EN PARTICULIER DE PIECES EN RUBAN SUR DES PROFILES A CHAMBRES CREUSES

(30) Priorität: 15.11.2005 DE 202005017976 U
(43) Veröffentlichungstag der Anmeldung: 30.07.2008
(73) Patentinhaber: Dr. Hahn GmbH & Co. KG, 41189 Mönchengladbach-Wickrath (DE)
(72) Erfinder: BÖGEL-PÖTTER, Jürgen, 41849 Wassenberg (DE); HERGLOTZ, Tibor, 52372 Kreuzau (DE)
(74) Vertreter: Kluin, Jörg-Eden
(86) Internationale Anmeldenummer: PCT/EP2006/010583
(87) Internationale Veröffentlichungsnummer: WO 2007/057106

(56) Entgegenhaltungen:
- DE-A1-102004 039 300
- GB-A- 865 200
- GB-A- 1 354 351
- GB-A- 2 007 793

## Beschreibung

Die Erfindung betrifft eine Kombination einer Montageschraube zur Befestigung von Beschlagteilen, insbesondere von Bandteilen an Hohlkammerprofilen und einem Hohlkammerprofil.

Es ist bekannt, zur Befestigung von Bandteilen an Hohlkammerprofilen Befestigungsplatten zu verwenden, die in eine Kammer des Hohlprofils von der offenen Stirnseite eingeschoben werden, so dass sie die Rückseite derjenigen Wandung, an der das Band anliegen soll, hintergreifen. Die Befestigungsplatten weisen Gewindebohrungen auf, in die das Bandteil durchsetzende Befestigungsschrauben eingedreht werden. Hierzu müssen der Lage der Gewindebohrungen entsprechend Durchgangsbohrungen in die Profilwandung eingebracht werden. Die Lage der Durchgangsbohrungen wird beispielsweise mittels einer Bohrschablone festgelegt. In die Bandteile und die Durchgangsbohrungen eingreifende Zentrierhülsen dienen der exakten Positionierung des Bandes, bevor dies durch Anziehen der Befestigungsschrauben fixiert wird.

Nachteilig ist bei dieser Art der Befestigung, die beispielsweise von der Türbandserie 60AT der Firma Dr. Hahn GmbH & Co. KG, Mönchengladbach bekannt ist, das Haltekräfte lediglich in eine Wandung des Hohlkammerprofils eingeleitet werden. Insbesondere bei dünnwandigen Profilen kann es zur Verformung der Profilwandung kommen. Ferner ist die Befestigung wegen der Vielzahl von durchzuführenden Arbeitsschritten und benötigten Bauteilen aufwendig.

Aus dem Gebrauchsmuster DE 202 18 699 U ist eine Vorrichtung zur Befestigung von Beschlagteilen an Mehrkammerprofilen bekannt. Sie weist eine Montageschraube und eine Befestigungsschraube auf, wobei die Montageschraube ein Außengewinde einer Länge umfasst, dass mehrere Wandungen des Hohlkammerprofils bei eingedrehter Montageschraube durchsetzt werden. Am hinteren Ende der Montageschraube ist ein in die hintere Stirnseite mündendes Innengewinde vorgesehen, in das die Befestigungsschraube eindrehbar ist. Ferner ist an diesem stimseitigen Ende ein Innensechskant zum Angriff eines Drehwerkzeugs zum Eindrehen der Montageschraube in das Hohlkammerprofil eingearbeitet. Schließlich weist die Montageschraube an ihrem hinteren Ende einen Anlagebund auf. Zur Befestigung eines Beschlagteils wird die Befestigungsschraube soweit in das Hohlkammerprofil eingedreht, dass der Anlagebund an der Außenprofilwandung anliegt. Anschließend wird das Beschlagteil, welches eine an den Außenumfang des Anlagebundes angepasste Zentrierbohrung aufweisen muss, aufgesetzt und durch Eindrehen der Befestigungsschraube in das Innengewinde festgesetzt.

Zwar haben sich derartige Montageschrauben zur sicheren Befestigung eines Beschlagteils an einem Hohlkammerprofil bewährt, nachteilig ist jedoch, dass es insbesondere dann, wenn das Hohlprofil wärmeisolierende Stege zwischen benachbarten Wandungen aufweist, aufgrund der die Profilwandungen durchsetzenden Montageschraube zu unerwünschten Kältebrücken kommen, was bei der Verwendung von den eingangs erwähnten Befestigungsplatten nicht der Fall ist.

Aus der GB 865 200 A ist eine elektrisch nicht leitende Schraube bekannt. Sie weist einen metallischen Kern auf, dessen in Einschraubrichtung vorderes Ende die Spitze eines selbstschneidenden Gewindes bildet.

Mit Ausnahme dieser Spitze ist der Kern mit einem elektrisch nicht leitenden Kunststoffmaterial überzogen. Die Schraube dient der elektrisch isolierten Verbindung von Bauteilen, um die Gefahr von Kurzschlüssen oder elektrischen Schlägen zu reduzieren.

Die DE 10 2004 039 300 A1 betrifft ein Befestigungselement zur Abstandsbefestigung von Abdeckplatten oder Schienen in Verbindung mit Dämmstoffen an einem Unterbau. Dieses Befestigungselement weist einen ersten Gewindeabschnitt sowie einen Befestigungsabschnitt auf, dessen Unterseite einen Anschlag bildet. Zwischen der Unterseite und dem Gewindeabschnitt befindet sich ein gewindefreier Schaftabschnitt.

Der Erfindung liegt die Aufgabe zugrunde, eine Kombination einer Montageschraube und einem Hohlprofil zu schaffen, bei welcher die Schaffung von Kältebrücken vermieden wird.

Diese Aufgabe wird durch die in Anspruch 1 wiedergegebene Kombination gelöst.

Die Montageschraube dieser Kombination umfasst erfindungsgemäß einen in Eindrehrichtung gesehen vorderen Teil, der ein Gewinde umfasst und vorzugsweise aus einem metallischen Werkstoff hergestellt ist, sowie einen hinteren Teil aus einem wärmeisolierenden Werkstoff, vorzugsweise Kunststoff.

Überraschenderweise hat sich gezeigt, dass die mit der Montageschraube erzielbaren Haltekräfte für die allermeisten Anwendungen ausreicht, selbst wenn der hintere Teil aus einem im Vergleich zum vorderen Teil weichen, dafür jedoch schlecht wärmeleitenden Werkstoff hergestellt ist.

Das Außengewinde des vorderen Teils ist vorzugsweise als selbstschneidendes Gewinde ausgebildet, welches beim Eindrehen der Montageschraube in Bohrungen im Hohlprofil dann Gewindegänge ausbildet, in welche sich das Außengewinde des hinteren, isolierenden Teils der Montageschraube beim Vortreiben derselben selbsttätig eindreht.

Mit der erfindungsgemäßen Kombination wird die Ausbildung unerwünschter Kältebrücken zuverlässig verhindert, da eine nennenswerte Wärmeübertragung an einer Profilwandung, in die die Montageschraube mit ihrem vorderen Bereich eingreift, auf die Außenwandung des Profils, die lediglich mit dem wärmeisolierenden Teil der Montageschraube in Berührung kommt, nicht stattfindet.

Bei einer besonders bevorzugten konstruktiven Variante greifen der vordere und der hintere Teil formschlüssig ineinander ein. Auf diese Weise sind die beiden Teile besonders dauerhaft miteinander verbunden.

Um die formschlüssige Verbindung zu bewirken, kann der vordere Teil einen Fortsatz aufweisen, der in den hinteren Teil hineinragt. Diese Ausprägung ist deshalb bevorzugt gewählt, da das Material des vorderen Teils eine größere Festigkeit als das Material des hinteren Teils aufweist und somit die Ausbildung des Fortsatzes an dem vorderen Teil zu bevorzugen ist. Es ist, jedoch ebenso möglich - sofern die verwendeten Materialien dies zulassen - den Fortsatz an dem hinteren Teil vorzusehen.

Der Fortsatz umfasst zur Bewirkung des Formschlusses vorzugsweise mindestens eine Schlüsselfläche. Mit Schlüsselfläche" ist hierbei eine Fläche auf dem Mantel des Fortsatzes gemeint, die eine von einer Zylinderfläche abweichende Gestalt aufweist.

Besonders einfach herstellbar ist die erfindungsgemäße Montageschraube dann, wenn der hintere Teil im Spritzgussverfahren hergestellt und der Fortsatz bei der Herstellung mit umspritzt wird. Ein besonders wirksamer Formschluss ohne das Erfordernis, diesen durch separate Mittel nach dem Zusammenfügen des vorderen und hinteren Teils erst herstellen zu müssen, ist dadurch gewährleistet.

Grundsätzlich ist es möglich, das Außengewinde der Montageschraube als Maschinengewinde auszubilden. Dann müssen allerdings komplementäre Innengewinde vor dem Eindrehen in das Profil eingearbeitet werden, wodurch sich der mit der Montage von Beschlagteilen verbundene Aufwand wesentlich erhöht. Es ist daher - wie eingangs bereits erwähnt - bevorzugt, wenn das Außengewinde des vorderen Teils als selbstschneidendes Gewinde ausgebildet ist. In diesem Falle wird der separate Arbeitsschritt des Einarbeitens eines Innengewindes in die Lochung des Profils überflüssig. Um das erste Eindrehen der Montageschraube zu erleichtern, kann der Vorderbereich des vorderen Teils konisch zulaufend ausgebildet sein. Dies erleichtert zum einen das Finden der Lochungen in den Profilwandungen, andererseits werden die Gewindegänge in die Lochungen gleichmäßiger eingearbeitet.

Des weiteren besonders bevorzugt ist eine Ausführungsform der erfindungsgemäßen Montageschraube, bei der der hintere Teil eine von seinem hinteren stirnseitigen Ende zugängliche Einrichtung zum Ansetzen eines Drehwerkzeugs umfasst. Diese Einrichtung kann beispielsweise die Form eines Innensechskants aufweisen.

Diese Ausgestaltung ist insbesondere für Anwendungen geeignet, bei welchen nicht sehr hohe Drehmomente zum Eindrehen der Montageschraube und Schneiden des Gewindes notwendig sind.

Bei Anwendungen, bei denen sehr hohe Drehmomente zum Eindrehen der Montageschraube in die Lochungen zu erwarten sind, beispielsweise bei dickwandigen Hohlkammerprofilen aus harten Materialien ist es jedoch bevorzugt, die Einrichtung zum Ansetzen eines Drehwerkzeugs an dem hinteren stimseitigen Ende des Fortsatzes vorzusehen und das hintere Teil mit einer Durchgangsbohrung zum Einführen des Drehwerkzeugs auszustatten. Denn bei dieser konstruktiven Variante wird das zur Drehbetätigung notwendige Drehmoment über den Fortsatz direkt in das vordere Teil eingeleitet und es besteht nicht die Gefahr, dass durch die Übertragung der Drehmomente von dem hinteren auf das vordere Teil die formschlüssige Verbindung zwischen den beiden Teilen leidet.

Um eine dauerhafte formschlüssige Verbindung zwischen dem vorderen und dem hinteren Teil zu bewerkstelligen, ist eine Ausführungsform der erfindungsgemäßen Montageschraube besonders bevorzugt, bei welcher an der Mantelfläche des Fortsatzes zwei zueinander parallele Schlüsselflächen vorgesehen sind, durch die sich eine Durchgangsbohrung erstreckt. Wird der Fortsatz nun von dem wärmeisolierenden Material bei der Herstellung der Montageschraube umspritzt, so durchdringt das wärmeisolierende Material die Durchgangsbohrung und schmiegt sich an die Schlüsselflächen an, wodurch nach dem Aushärten dieses Materials eine feste, formschlüssige Verbindung sowohl in axialer, als auch in Drehrichtung besteht.

Die Montageschraube kann an ihrem hinteren, stirnseitigen Ende einen radial überstehenden Kopf aufweisen, mittels welchem die Klemmkräfte auf das zu befestigende Beschlagteil übertragen werden. Bevorzugt ist jedoch eine Variante, bei welcher von dem hinteren stimseitigen Ende her in das hintere Teil der Montageschraube ein Innengewinde eingearbeitet ist, in welches dann - wie aus dem Stand der Technik bekannt - eine das Beschlagteil durchsetzende Befestigungsschraube eindrehbar ist.

In der Zeichnung sind Ausführungsbeispiele von erfindungsgemäßen Montageschrauben dargestellt. Es zeigen:
- Fig. 1: ein erstes Ausführungsbeispiel in einer getrennten Darstellung des vorderen und hinteren Teils in einer perspektivischen Seitenansicht;
- Fig. 2: dasselbe Ausführungsbeispiel in derselben Ansicht, jedoch im Längsschnitt;
- Fig. 3: das Ausführungsbeispiel gemäß Fig. 1 und 2 wiederum im Längsschnitt, je- doch im zusammengefügten Zustand von vorderem und hinterem Teil;
- Fig. 4: ein zweites Ausführungsbeispiel einer erfindungsgemäßen Montageschrau- be in einer Fig. 2 entsprechenden Ansicht sowie
- Fig. 5: dasselbe Ausführungsbeispiel wie in Fig. 4 in einer Fig. 3 entsprechenden Ansicht.

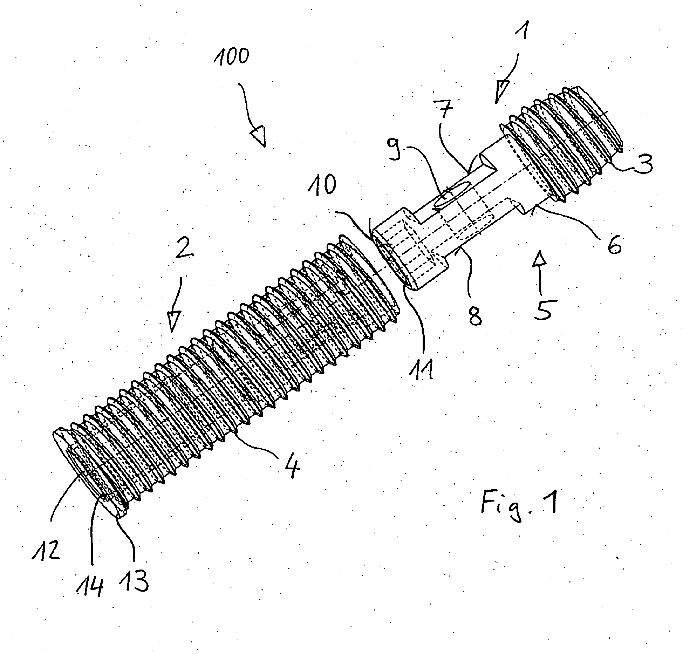

Die in den Fig. 1 bis 3 dargestellte Montageschraube 100 umfasst einen in Eindrehrichtung gesehen vorderen Teil 1 und einen hinteren Teil 2. Der vordere Teil 1 weist ein selbstschneidendes Gewinde 3 auf, das seine Fortsetzung in einem Außengewinde 4 des hinteren Teils 2 findet. Der vordere Teil 1 ist aus einem metallischen Werkstoff hergestellt. An das selbstschneidende Gewinde 3 schließt sich nach hinten ein Fortsatz 5 an, welcher eine zylinderförmige Mantelfläche 6 umfasst, in die zwei zueinander parallele Schlüsselflächen 7, 8 eingearbeitet sind.

Zwischen den Schlüsselflächen 7, 8 erstreckt sich eine Durchgangsbohrung 9. In die hintere Stirnseite 10 des Fortsatzes ist eine Einrichtung zum Ansetzen eines Drehwerkzeugs 11 in Form eines Innensechskants eingearbeitet.

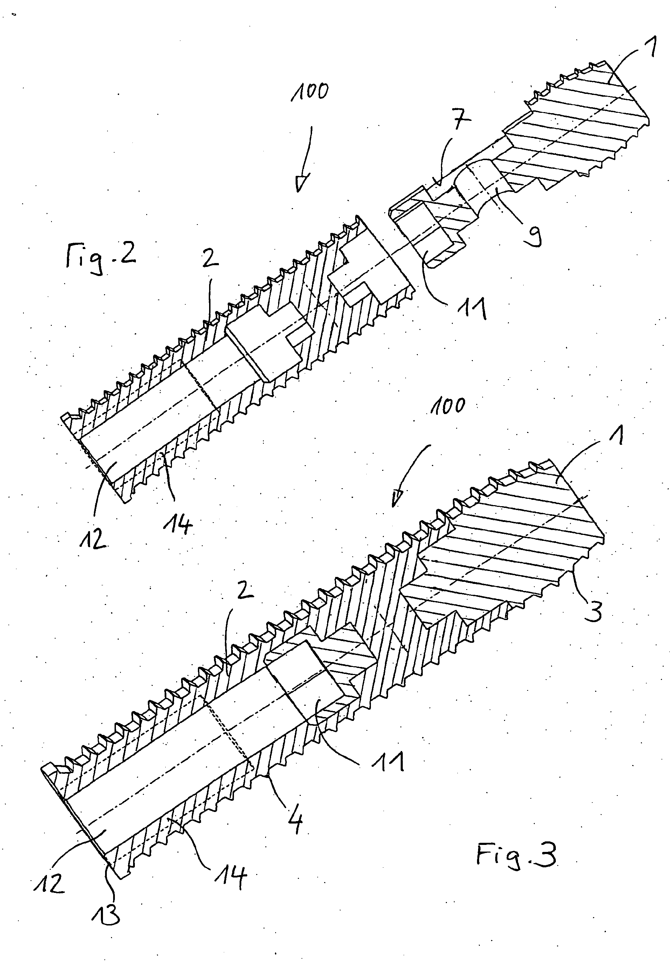

Der hintere Teil 2 der Montageschraube 100 ist aus einem wärmeisolierenden Material im Spritzgussverfahren hergestellt. In diesem Zusammenhang sei erwähnt, dass die Fig. 1 und 2 dahingehend missverstanden werden können, als die beiden Teile 1 und 2 als nachträglich miteinander verbindbar angesehen werden könnten. Dies ist bei dem dargestellten Ausführungsbeispiel jedoch nicht der Fall. Vielmehr wird der Fortsatz 5 bei der Herstellung des hinteren Teils 2 von dem wärmeisolierenden Material derart umspritzt, dass sich das wärmeisolierende Material durch die Durchgangsbohrung 9 hindurch erstreckt und an den Schlüsselflächen 7, 8 anliegt, wie dies aus Fig. 3 sinnfällig wird.

Der hintere Teil 2 weist eine Längsbohrung 12 auf, durch die ein in der Zeichnung nicht dargestelltes Drehwerkzeug in die Einrichtung 11 einführbar ist.

Ferner ist von der hinteren Stirnseite 13 ein Innengewinde 14 eingearbeitet, in welches eine in der Zeichnung nicht dargestellte Befestigungsschraube wie aus dem Stand der Technik bekannt zur Befestigung eines Beschlagteils eingedreht werden kann.

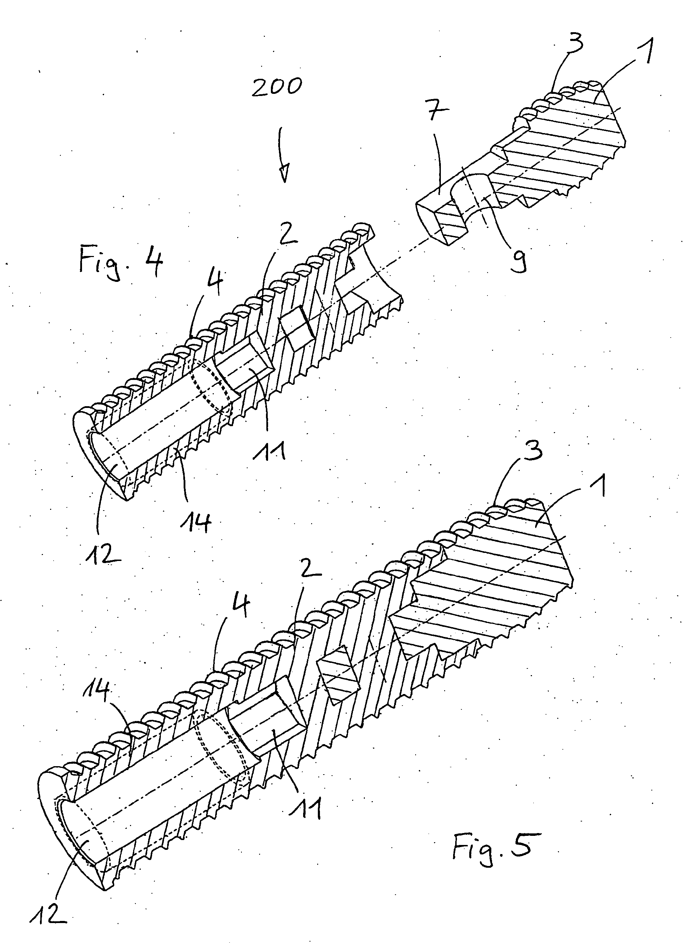

Ein zweites Ausführungsbeispiel einer erfindungsgemäßen Montageschraube 200 ist in Fig. 4 und 5 dargestellt. Um Wiederholungen zu vermeiden werden im folgenden lediglich die Unterschiede zu der Montageschraube 100 beschrieben.

Im Unterschied zur Montageschraube 100 ist bei der Montageschraube 200 die Einrichtung 11 zum Angriff eines Drehwerkzeugs nicht an der hinteren Stirnseite des Fortsatzes 5 vorgesehen, sondern sie ist am Ende der Längsbohrung 12 des hinteren Teils 2 angeordnet. Im Gegensatz zur Montageschraube 100 müssen daher bei der Montageschraube 200 Drehmomente, die zum Einarbeiten des Gewindes in Profilwandungen notwendig sind, von dem hinteren Teil 2 auf den vorderen Teil 1 übertragen werden.

### Bezugszeichenliste:

- 100, 200: Montageschraube
- 1: vorderer Teil
- 2: hinterer Teil
- 3: selbstschneidendes Gewinde
- 4: Außengewinde
- 5: Fortsatz
- 6: Mantelfläche
- 7: Schlüsselfläche
- 8: Schlüsselfläche
- 9: Durchgangsbohrung
- 10: hintere Stirnseite
- 11: Einrichtung
- 12: Längsbohrung
- 13: hintere Stirnseite
- 14: Innengewinde

## Patentansprüche

1. Kombination einer Montageschraube (100, 200) zur Befestigung von Bandteilen an Mehrkammerprofilen, und einem Mehrkammerprofil mit einem ein Außengewinde umfassendes Gewindeteil, das eine Länge aufweist, die größer als der Abstand zwei benachbarter Wandungen des Mehrkammerprofils ist,
**dadurch gekennzeichnet,**
**dass** die Montageschraube (100, 200) einen in Eindrehrichtung gesehen vorderen Teil (1), der ein Gewinde (3) umfasst und vorzugsweise aus einem metallischen Werkstoff hergestellt ist, und einen hinteren Teil (2) aus einem wärmeisolierenden Werkstoff, beispielsweise Kunststoff, der mit einer Außenwandung des Profils in Berührung kommt, umfasst.

2. Kombination nach Anspruch 1, **dadurch gekennzeichnet, dass** der vordere Teil (1) und der hintere Teil (2) der Montageschraube formschlüssig miteinander verbunden sind.

3. Kombination nach Anspruch 1 oder 2, **dadurch gekennzeichnet, dass** der vordere Teil (1) der Montageschraube einen Fortsatz (5) aufweist, der in den hinteren Teil (2) hineinragt.

4. Kombination nach Anspruch 3, **dadurch gekennzeichnet, dass** der Fortsatz (5) mindestens eine Schlüsselfläche (7, 8) umfasst.

5. Kombination nach Anspruch 4, **dadurch gekennzeichnet, dass** der hintere Teil (2) der Montageschraube im Spritzgussverfahren hergestellt und der Fortsatz (5) umspritzt ist.

6. Kombination nach einem der Ansprüche 1 bis 5, **dadurch gekennzeichnet, dass** das Außengewinde (4) des vorderen Teils (1) der Montageschraube selbstschneidend ausgebildet ist.

7. Kombination nach Anspruch 6, **dadurch gekennzeichnet, dass** der vordere Bereich des vorderen Teils (1) der Montageschraube konisch zuläuft.

8. Kombination nach einem der Ansprüche 1 bis 7, **dadurch gekennzeichnet, dass** der hintere Teil (2) der Montageschraube eine von seinem hinteren stimseitigen Ende (13) zugängliche Einrichtung (11) zum Ansetzen eines Drehwerkzeugs umfasst.

9. Kombination nach einem der Ansprüche 1 bis 7, **dadurch gekennzeichnet, dass** an dem hinteren stimseitigen Ende (10) des Fortsatzes (5) eine Einrichtung (11) zum Ansetzen eines Drehwerkzeugs vorgesehen ist und das hintere Teil (2) eine Längsbohrung zum Einführen des Drehwerkzeugs umfasst.

10. Kombination nach einem der Ansprüche 3 bis 9, **dadurch gekennzeichnet, dass** an der Mantelfläche (6) des Fortsatzes zwei zueinander parallele Schlüsselflächen (7, 8) vorgesehen sind, durch die sich eine Durchgangsbohrung (9) erstreckt.

11. Kombination nach einem der Ansprüche 1 bis 10, **dadurch gekennzeichnet, dass** der hintere Teil (2) der Montageschraube ein in die hintere Stirnseite (13) mündendes Innengewinde (14) umfasst.

## Claims

1. Combination of a mounting screw (100, 200) for fastening hinge parts to multi-chamber profiles, and a multi-chamber profile, having a threaded part which comprises an external thread and has a length which is greater than the spacing of two adjacent walls of the multi-chamber profile, **characterized in that** the mounting screw (100, 200) comprises a front part (1), as viewed in the screwing-in direction, which comprises a thread (3) and is preferably produced from a metallic material, and a rear part (2) of thermally insulating material, for example plastic, which comes into contact with an outer wall of the profile.

2. Combination according to Claim 1, **characterized in that** the front part (1) and the rear part (2) of the mounting screw are connected to one another in a form-fitting manner.

3. Combination according to Claim 1 or 2, **characterized in that** the front part (1) of the mounting screw has a continuation (5) which projects into the rear part (2).

4. Combination according to Claim 3, **characterized in that** the continuation (5) comprises at least one key surface (7, 8).

5. Combination according to Claim 4, **characterized in that** the rear part (2) of the mounting screw is produced by the injection-moulding process and the continuation (5) is encapsulated.

6. Combination according to one of Claims 1 to 5, **characterized in that** the external thread (4) of the front part (1) of the mounting screw is designed to be self-cutting.

7. Combination according to Claim 6, **characterized in that** the front region of the front part (1) of the mounting screw tapers conically.

8. Combination according to one of Claims 1 to 7, **characterized in that** the rear part (2) of the mounting screw comprises a device (11) accessible from its rear end (13) for attaching a rotary tool.

9. Combination according to one of Claims 1 to 7, **characterized in that** a device (11) for attaching a rotary tool is provided at the rear end (10) of the continuation (5) and the rear part (2) comprises a longitudinal bore for introducing the rotary tool.

10. Combination according to one of Claims 3 to 9, **characterized in that** two key surfaces (7, 8) which are parallel to one another and through which a through-hole (9) extends are provided on the lateral surface (6) of the continuation.

11. Combination according to one of Claims 1 to 10, **characterized in that** the rear part (2) of the mounting screw comprises an internal thread (14) which leads into the rear end side (13).

## Revendications

1. Combinaison d'une vis de montage (100, 200) pour la fixation de parties de pentures sur des profilés à chambres multiples, et d'un profilé à chambres multiples avec une partie filetée comportant un filet extérieur, qui présente une longueur plus grande que la distance séparant deux parois voisines du profilé à chambres multiples, **caractérisée en ce que** la vis de montage (100, 200) comprend une partie avant (1), vue dans le sens de vissage, qui présente un filet (3) et est de préférence fabriquée en un matériau métallique, et comprend une partie arrière (2) en un matériau isolant thermique, par exemple en matière plastique, qui vient en contact avec une paroi extérieure du profilé.

2. Combinaison selon la revendication 1, **caractérisée en ce que** la partie avant (1) et la partie arrière (2) de la vis de montage sont assemblées l'une à l'autre par emboîtement.

3. Combinaison selon la revendication 1 ou 2, **caractérisée en ce que** la partie avant (1) de la vis de montage présente un prolongement (5), qui s'engage dans la partie arrière (2).

4. Combinaison selon la revendication 3, **caractérisée en ce que** le prolongement (5) comprend au moins une face de clé (7, 8).

5. Combinaison selon la revendication 4, **caractérisée en ce que** la partie arrière (2) de la vis de montage est fabriquée par un procédé de moulage par injection et le prolongement (5) est enrobé par projection.

6. Combinaison selon l'une quelconque des revendications 1 à 5, **caractérisée en ce que** le filet extérieur (4) de la partie avant (1) de la vis de montage est auto-taraudeur.

7. Combinaison selon la revendication 6, **caractérisée en ce que** la région avant de la partie avant (1) de la vis de montage se termine en cône.

8. Combinaison selon l'une quelconque des revendications 1 à 7, **caractérisée en ce que** la partie arrière (2) de la vis de montage comprend un dispositif (11) accessible par son extrémité frontale arrière (13) pour l'application d'un outil de rotation.

9. Combinaison selon l'une quelconque des revendications 1 à 7, **caractérisée en ce qu'**il est prévu sur l'extrémité frontale arrière (10) du prolongement (5) un dispositif (11) pour l'application d'un outil de rotation et la partie arrière (2) comprend un perçage longitudinal pour l'introduction de l'outil de rotation.

10. Combinaison selon l'une quelconque des revendications 3 à 9, **caractérisée en ce qu'**il est prévu sur la surface latérale (6) du prolongement deux faces de clé opposées (7, 8) parallèles l'une à l'autre, à travers lesquelles s'étend un perçage traversant (9).

11. Combinaison selon l'une quelconque des revendications 1 à 10, **caractérisée en ce que** la partie arrière (2) de la vis de montage comprend un filet intérieur (14) débouchant dans la face frontale arrière (13).
